Europäisches Patentamt

(19) European Patent Office

Office européen des brevets

(11) Publication number: **0 005 707**
**B1**

(12) **EUROPEAN PATENT SPECIFICATION**

(45) Date of publication of patent specification: **04.11.81**

(51) Int. Cl.³: **F 16 C 33/76, F 16 J 15/32**

(21) Application number: **78850002.3**

(22) Date of filing: **05.06.78**

(54) Sealing device for bearings, especially roll bearings.

(43) Date of publication of application:
**12.12.79 Bulletin 79/25**

(45) Publication of the grant of the European patent:
**04.11.81 Bulletin 81/44**

(84) Designated Contracting States:
**DE FR GB SE**

(56) References cited:
FR - A - 2 020 073
FR - A - 2 036 386
FR - E - 93 150
US - A - 2 938 744
US - A - 3 022 081
US - A - 3 064 982
US - A - 3 275 333
US - A - 3 341 265
US - A - 3 356 376
US - A - 3 479 728
US - A - 3 482 844
US - A - 3 682 488
US - A - 4 037 849
US - A - 4 049 281

(73) Proprietor: **STEFA INDUSTRI AKTIEBOLAG**
**Kungsgatan 16**
**261 31 Landskrona (SE)**

(72) Inventor: **Klinteberg, Gustav Rune**
**Myntstigen 8**
**261 61 Landskrona (SE)**
Inventor: **Johansson, Nils Ake Bertil**
**Maskrosvägen 8**
**261 71 Landskrona (SE)**
Inventor: **Johansson, Bert Lennart Ingmar**
**Trancellsgatan 83**
**261 35 Landskrona (SE)**
Inventor: **Dahlgren, Christer Harald**
**Agatan 8**
**268 00 Svalöv (SE)**

(74) Representative: **Avellan-Hultman, Bengt**
**Hultmans Patentbyra Aktiebolag Jungfrugatan 16**
**P.O. Box 5165**
**Stockholm 5 (SE)**

Sealing device for bearings, especially roll bearings

The present invention relates to a sealing device for bearings in rotational apparatus and machines, in which a shaft rotates within a hub or a hub rotates relative to a shaft, said shaft in the latter case not rotating. For such bearing devices, ball bearings or roll bearings are used to a great extent, and these should be well embedded in oil or grease for lubrication. In bearings of this type it is desired to avoid leakage of the grease or the oil to the space outside of the bearing, but it is also important to avoid the entry of foreign particles into the ball bearing or the roll bearing. Therefore, it has already been proposed, for this purpose, to provide two sealing rings and sealing surfaces in series after each other, said sealing rings having the form of an elastomeric body, usually of rubber, in contact against smooth surfaces whereby the sealing ring adjacent to the bearing has been intended primarily to prevent leakage of grease and oil to the outside, whereas the sealing ring positioned more remote from the bearing was intended primarily to prevent the entry of rigid foreign particles into the bearing. Of course, the two sealing rings will also, each *per se* function as a security or back-up for the specific purpose for which the other sealing ring is primarily intended.

The sealing rings which are usually made from rubber also are shaped with a sealing lip, contacting a smooth cylindric metallic surface.

Sealing devices of this type, necessarily, involve a lot of different structural components, such as the two elastomeric sealing rings and the two metallic surface parts against which the elastomeric sealing rings are in contact, and often some additional protection parts. Both the elastomeric sealing rings and the metallic surfaces contacted by the elastomeric sealing rings are subject to wear and, therefore, it has earlier been regarded desirable that each of these parts should be replaceable. Accordingly, all of the components of the sealing device were usually mounted in the place of manufacture of the machine, for instance a cargo automobile or a truck.

Investigations forming basis of the present invention now have proved that the wear of the elastomeric sealing ring as well as of the metallic surfaces is promoted, to a substantial extent, if these parts are not mounted in the exactly correct position in relation to each other when assembling the bearing, especially as to their position in axial direction. These investigations have also proved that if the sealing device is mounted or assembled at the machinery work-shop when building it into the machine concerned, the mounting is often done incorrectly. This may stem from lack of skill of the worker but perhaps to a greater extent from the fact that he has usually or frequently not at his disposal such alignment devices, jigs or the like which are however available to the manufacturer of the sealing device. Accordingly, one has arrived at the opinion that it is advantageous if the entire sealing device is arranged in such a way to be delivered to the manufacturer of the machine without the components being assembled in the machine manufacturer's work-shop, even if the assembling in the form of a unit would mean, that when some singular component becomes worn this can no longer be replaced individually, but the entire sealing device will have to be replaced.

By making the sealing device in the form of a closed unit one will get a possibility to place both of the elastomeric sealing rings and also the metallic parts contacted by them in perfectly covered positions such that these parts will be well protected against damages during transportation, storing or other handling.

Also, the dimensions, especially those in the axial direction, of the unit can be less than the corresponding dimensions of a device having releasable and replaceable components.

By assembling the components into a closed unit the possibility of removal of heat generated in the unit can be improved. This possibility will be further enhanced by providing protection means for enclosing the components within the unit in a suitable way, whereby the heat generated by friction between each elastomeric sealing ring and the corresponding contact surface will be removed in an advantageous way.

The French patent specification 2.020.073 described a sealing device for bearings in which two seals are provided in series, each comprising a sealing lip made from an elastomer and arranged on one single ring of same elastomeric material with each of said sealing lips contacting a cylindrical surface at the respective sealing locations. The ring has a metallic liner of L-shaped profile and the sealing lips are disposed at different distances from the axis of the sealing device. The sealing device has a housing comprising two metallic members one of said members having a L-shaped profile with axially and radially extending branches. The axially extending branch reaches into and tightly contacts the outermost axially extending branch of the second housing member with the free edge of the second housing member being folded over the junction of the axially and radially extending branches of the L-shaped member.

The present invention relates to an improvement of the sealing device according to the above.

According to the invention, said second housing member has a generally Z-shaped profile with inner and outer extending branches and an interconnecting radially extending branch, and the outermost sealing lip engages the axially extending branch of the L-shaped housing member.

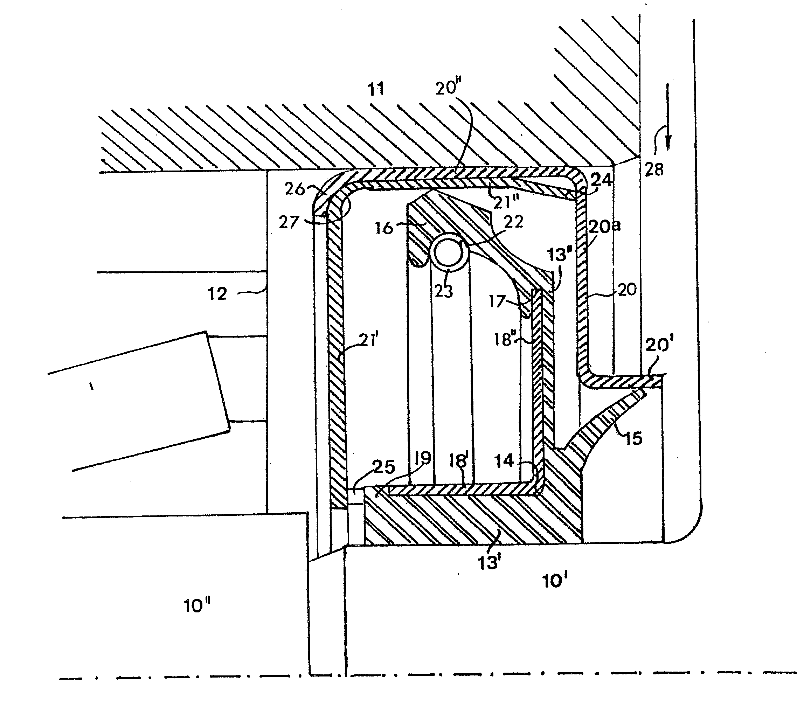

The invention will be described hereafter in connection with an embodiment illustrated in the attached drawing, but it is to be understood that the invention shall not be limited to this specific embodiment but rather that different modifications may exist within the scope of the invention.

In the drawing, thus, a shaft 10 and a hub 11 are shown, the shaft 10 rotating within said hub 11. However, a contrary disposition may be used such that the shaft will be stationary with the hub rotating, and, finally, both of these parts may be rotatable, dependent upon the type of machine within which the bearing is provided. The shaft comprises two parts 10' and 10", mutually connected but it is unimportant to the present invention of what type the latter one 10" of these parts may be. As shown in the drawing, it may for instance support the interior ring of a roll bearing, a ball bearing or the like. The shaft part 10', however, supports the sealing device according to the present invention. The bearing, in the drawing, is only schematically indicated by means of the contour 12.

A sealing ring 13 formed from an elastomer, such as rubber, is mounted on the shaft part 10'. In order better to attach it to the shaft 10, the bore therein for the shaft may have a wave shaped profile, but this detail, which is known *per se* does not form part of the present invention. The elastomeric sealing ring 13 has a generally L-shaped profile comprising the basic part 13' applied to the shaft proper 10', said part being axially concentric, as well as the arm part 13" which is at least generally perpendicular to the direction of the shaft. Close to the junction 14 between the two parts 13' and 13" the inner sealing lip 15 is branched off in a direction outwardly. At the outer edge of the branch 13", the outer sealing lip 16 and an inwardly open groove 17 are provided, the radial branch 18" of the liner 18 being introduced into said groove. This liner 18 also has a generally L-shaped profile, thus comprising not only the part 18" but also an axial concentric part 18'. The lining 18 and the elastomeric sealing ring 13 preferably are vulcanized together, and for establishing the position of the liner 18 in relation to the elastomeric sealing ring 13, an annular flange 19 is provided at the end of the elastomeric ring 13 adjacent the bearing 12, the edge of the axially concentric part 18' of the liner 18 resting against said flange 19.

The complete sealing device is enclosed in a housing or cover comprising the two parts 20 and 21.

Part 20 of the housing or cover has a generally Z-like profile and contains the radial branch 20a, a first axial concentric branch 20' closer to the shaft 10 and a second axial concentric branch 20" remote from the shaft 10 and inserted into the hub 11.

The sealing lip 15 engages under resilient pressure the inner surface of the branch 20' of the Z-shaped cover part 20.

The second part 21 of the cover has a generally L-shaped profile such that its axial concentric branch 21" engages the interior surface of the axial concentric branch 20" of the cover or housing part 20 of the Z-shaped profile. Its substantially radial part 21' extends perpendicularly to the shaft 10, but without contacting said shaft.

The sealing ring 16 engages the interior surface of the axial concentric part 21" of the last mentioned cover or housing part 21 of L-shaped profile. For providing the necessary sealing pressure, a circular groove 22 is arranged on the inner side of the sealing lip 16 and contains an expansion spring 23.

For establishing the mutual positions of the different components a number of steps have been taken:

Thus, the free edge 24 of the axial concentric branch 21" of the cover part 21 is dimensioned and shaped in such a way that the two cover parts will be correctly mutually positioned when said free edge 24 engages the surface of the radial part 20a of the cover part 20. Further, the elastomeric sealing ring 13 may be provided with a number of joggles 25 distributed along its end facing the bearing, said joggles having such an axial width that, at correct mounting of the two cover parts, they will engage the side of the radial part 21' of cover part 21. By these steps, a correct mutual positioning is secured between the two cover parts and thereby, also, a correct positioning is obtained of the two sealing lips 15 and 16 in relation to the cylindrical surfaces engaged by them.

When assembling the sealing device one has to proceed in the following way:

After the liner 18 has, by vulcanization, been attached to the elastomeric sealing ring 13, the spring 23 is inserted in place. The unit thus formed, thereafter, is inserted into the cover part 20 whereby, suitably, some measure indication arrangement such as a jig or the like should be used for determining the correct position. Thereafter, the cover part 21 is positioned in place inside of the axial concentric part 20" of the cover or housing 20, and the free edge 26 is folded around to press onto the junction 27 of the branches of cover part 21.

Thereafter, the sealing device is ready to be introduced into place in the machine, for instance a wheel bearing of an automobile or the like where it is ultimately to be used as a seal for a bearing.

Now, it is evident that one has, in this way, created a comprehensive unit comprising the two seals by means of the lips 15 and 16, and that these lips are in correct position in relation to their engagement surfaces so that the best possible sealing effect will be obtained. The bearing 12 usually is filled with oil or grease, the oil having a liquid consistency and the grease, by its heating during work, being converted into a more or less liquid consistency. It is important that these lubrication agents shall not get an opportunity of leaking out of the bearing 12.

This is in first place prevented by means of the sealing lip 16 in engagement with the surface on the interior side of the axial concentric part 21″. If, in spite of this, some lubricant should leak past this sealing area, it will be prevented from deviating by the seal between the lip 15 and the metallic surface engaged by said lip, said sealing area being located after the first mentioned sealing area. The latter sealing area, on the other side, is intended in first place to prevent rigid particles from entering into the bearing, such as in the direction of the arrow 28, but should there be some deficiency in the seal, and such rigid particles would nevertheless, in this way, pass the sealing lip 15, then they will encounter the sealing lip 16. It should be noted that sealing devices of the type herein described are preferably used as seals at wheel shafts of automobiles, and just in such a case it is imperative that road gravel and similar small rigid particles must not enter into the wheel bearing.

Generation of heat cannot be avoided in the sealing surfaces proper and this heat has to be removed in one way or another in order that the elastomer in the sealing areas shall not be damaged. In the present sealing device, the two lips 15 and 16 contact the inner surfaces of the parts of the cover 20, which are made from metal and, thus, form good heat conductors. Cover part 20, in turn, contacts the hub 11 over a substantial surface represented by the exterior surface of the axial concentric part 20″, a good heat conduction, thus, existing.

By the present invention, therefore, the advantage of earlier constructions does no longer apply, whereby some single component which had got used up by wear could easily be replaced but, in compensation thereof, the advantage of a very simple mounting is gained because both of the sealing areas are built in into one single unit and this unit requires less space, especially in axial direction, than was possible to attain in the earlier constructions, and, finally, all of the sealing unit may be manufactured in the same factory which also manufactures the sealing rings whereby it is more possible to ensure that the sealing lips 15 and 16 contact correctly and advantageously the assigned areas of the metallic surfaces. To this adds that all of the sealing device itself is well covered whereby, as far as ever possible, no lubrication agents will leak out and no impurities will leak in.

## Claims

1. A sealing device for bearings, especially roll bearings, in which two seals (15—20′, 16—21″) are provided in series, each comprising a sealing lip (15, 16) made from an elastomer and arranged on one single ring (13) of the same elastomeric material with each of said sealing lips (15, 16) contacting a cylindrical surface at the respective sealing locations, said ring (13) having a metallic liner (18) of generally L-shaped profile and the sealing lips (15, 16) being disposed at different distances from the axis of the sealing device, the sealing device having a housing comprising two metallic members (20, 21) one of said members (21) having a generally L-shaped profile with axially and radially extending branches (21″, 21′), said axially extending branch (21″) extending into and tightly contacting the outermost axially extending branch (20″) of the second housing member (20), with the free edge (26) of the outermost branch (20″) of the second housing member (20) being folded over the junction (27) of the axially and radially extending branches (21″, 21′) of the L-shaped member (21), characterized in that said second housing member (20) has a generally Z-shaped profile with inner and outer axially extending branches (20′, 20″) and an interconnecting radially extending branch (20a), and in that the outermost sealing lip (16) engages the axially extending branch (21″) of the L-shaped housing member (21).

2. A sealing device according to claim 1, characterized in that the member (21) of L-shaped profile contacts with the free edge (24) of its axially extending branch (21″) the inner side of the radial branch (20a) of the member (20) of Z-shaped profile.

3. A sealing device according to claim 1 or 2, characterized in that the radial branch (21′) of the member of L-shaped profile is positioned in contact with joggles (25) provided at spaced locations around the periphery of the elastomeric ring (13).

4. A sealing device according to any of the above claims, characterized in that the radial branch (18″) of the metallic liner (18) of L-shaped profile is inserted into an outwardly directed groove (17) in the elastomeric ring (13), and that the axially extending branch (18′) of the liner (18) rests against an outwardly directed flange (19) on the axially extending hub part (13′) of the elastomeric ring (13).

5. A sealing device according to any of the above claims, characterized in that the elastomeric ring (13) is attached to its liner (18) by vulcanization.

6. A sealing device according to any of the above claims, characterized in that the outer one (16) of the two sealing lips comprises, on its inner side, a groove (22) in which an annular expansion screw spring (24) is introduced.

## Patentansprüche

1. Dichtvorrichtung für Lager, insbesondere Wälzlager, mit zwei hintereinander angeordneten Dichtungen (15, 20′ und 16, 21″) mit je einer elastomeren sowie an der zugeordneten Dichtstelle eine zylindrische Fläche berührenden Dichtlippe (15 bzw. 16), wobei beide Dichtlippen (15 und 16) von der Achse der Dichtvorrichtung unterschiedliche Abstände aufweisen und an einem gemeinsamen Dichtring (13) aus elastomerem Material vorgesehen sind, der eine metallische Einlage (18) mit einem im wesentlichen L-förmigen Schnittprofil aufweist, und mit einem Gehäuse aus zwei metallischen Teilen (20, 21), von denen das erste (21) ein im wesentlichen L-förmiges Schnittprofil mit axialen und radialen Zweigen (21", 21') aufweist, von denen der axiale Zweig (21") dicht anliegend in den äußeren axialen Zweig (20") des zweiten Teiles (20) eingreift, wobei das freie Ende des äußersten axialen Zweiges (20") des zweiten Teiles (20) über die die beiden Zweige (21' und 21") des L-förmigen Schnittprofils des ersten Teiles (21) verbindende Scheitelkrümmung (27) herumgebördelt ist, dadurch gekennzeichnet, daß der zweite Teil (20) des Gehäuses ein im wesentlichen Z-förmiges Schnittprofil mit jeweils axial verlaufenden inneren und äußeren Zweigen (20', 20") aufweist, die über einen radial verlaufenden Zweig (20a) miteinander verbunden sind, und dadurch, daß die äußere Dichtlipper (16) am axialen Zweig (21") der ersten Teiles (21) des Gehäuses anliegt.

2. Dichtvorrichtung nach Anspruch 1, dadurch gekennzeichnet, daß der das L-förmige Schnittprofil aufweisende erste Teil (21) mit dem äußeren Rand (24) seines axialen Zweiges (21") an der Innenseite des radial verlaufenden Zweiges (20a) des das Z-förmige Schnittprofil aufweisenden zweiten Teiles (20) anliegt.

3. Dichtvorrichtung nach Anspruch 1 oder 2, dadurch gekennzeichnet, daß der radiale Zweig (21') des das L-förmige Schnittprofil aufweisenden ersten Teiles (21) an Vorsprüngen (25) anliegt, die am elastomeren Dichtring (13) entlang dem Umfang von dessen einer Stirnseite in gegenseitigem Abstand verteilt angeordnet sind.

4. Dichtvorrichtung nach einem der vorhergehenden Ansprüche, dadurch gekennzeichnet, daß der radiale Zweig (18") der das L-förmige Schnittprofil aufweisenden metallischen Einlage (18) in eine im elastomeren Dichtring (13) befindliche, nach außen gerichtete Ringnut (17) eingesetzt ist, und daß der axiale Zweig (18') der Einlage (18) gegen einen nach außen gerichteten Bund (19) am axialen Nabenteil (13') des Dichtringes (13) abgestützt ist.

5. Dichtvorrichtung nach einem der vorhergehenden Ansprüche, dadurch gekennzeichnet, daß der elastomere Dichtring (13) an seine Einlage (18) anvulkanisiert ist.

6. Dichvorrichtung nach einem der vorhergehenden Ansprüche, dadurch gekennzeichnet, daß die äußere (16) der beiden Dichtlippen (15, 16) an ihrer Innenseite eine Ringnute (22) aufweist, in die eine ringförmige Schraubendruckfeder (23) eingesetzt ist.

**Revendications**

1. Un dispositif d'étanchéité pour paliers, en particulier pour roulements à rouleaux, dans lequel deux joints (15—20', 16—21") sont montés dans une disposition en série, chacun comprenant une lèvre d'étanchéité (15, 16), ces lèvres étant fabriquées en élastomère et disposées sur une unique bague (13) fabriquée dans la même matière élastomère, chacune desdites lèvres d'étanchéité (15, 16) étant en contact avec une surface cylindrique aux emplacements d'étanchéité respectifs, ladite bague (13) comportant une armature métallique (18) ayant un profil approximativement en forme de L et les lèvres d'étanchéité (15, 16) étant disposées à des distances différentes de l'axe du dispositif d'étanchéité, le dispositif d'étanchéité comportant un boîtier composé de deux éléments métalliques (20, 21), l'un desdits éléments (21) ayant un profil approximativement en forme de L comportant des branches s'étendant axialement et radialement (21", 21') la branche (21") s'étendant axialement s'étendant en étroit contact avec la branche s'étendant axialement la plus extérieure (20") du second élément de boîtier (20), le bord libre (26) de la branche la plus extérieure (20") du second élément de boîtier (20) étant replié sur la jonction (27) des branches s'étendant axialement et radialement (21", 21') de l'élément en forme de L (21), caractérisé en ce que le second élément de boîtier (20) a un profil approximativement en forme de Z comportant des branches intérieures et extérieures (20', 20") s'étendant axialement et une branche de liaison (20a) s'étendant radialement et en ce que la lèvre d'étanchéité la plus extérieure (16) est en appui contre la branche (21") s'étendant axialement de l'élément de boîtier (21) en forme de L.

2. Un dispositif d'étanchéité selon la revendication 1, caractérisé en ce que l'élément (21) dont le profil a la forme d'un L est en contact par le bord libre (24) de sa branche (21") s'étendant axialement avec la face intérieure de la branche radiale (20a) et l'élément (20) à profil en forme de Z.

3. Un dispositif d'étanchéité selon la revendication 1 ou 2, caractérisé en ce que la branche radiale (21') de l'élément à profil en L est positionnée en contact avec des dents (25) formées à des emplacements espacés autour de la périphérie de la bague (13) en matière élastomère.

4. Un dispositif d'étanchéité selon l'une quelconque des revendications ci-dessus, caractérisé en ce que la branche radiale (18") de l'armature métallique (18) à profil en forme de L est insérée dans une rainure (17) orientée vers l'extérieur formée dans la bague (13) en matière élastomère et en ce que la branche (18') s'étendant axialement de l'armature (18) repose contre un rebord (19) dirigé vers l'extérieur formée sur la partie de moyeu (13') s'étendant axialement de la bague (13) en matière

**0 005 707**

élastomère.

5. Un dispositif d'étanchéité selon l'une quelconque des revendications ci-dessus, caractérisé en ce que la bague (13) en matière élastomère est fixée à son armature (18) par vulcanisation.

6. Un dispositif d'étanchéité selon l'une quelconque des revendications ci-dessus, caractérisé en ce que celle (16) des deux lèvres d'étanchéité qui est située à l'extérieur comporte, sur sa face intérieure, une rainure (22) dans laquelle un ressort d'expansion hélicoïdal (23) est introduit.